(19) Europäisches Patentamt
European Patent Office
Office européen des brevets

(11) **EP 4 300 362 A1**

(12) **EUROPÄISCHE PATENTANMELDUNG**

(43) Veröffentlichungstag:
03.01.2024  Patentblatt 2024/01

(21) Anmeldenummer: 22182422.0

(22) Anmeldetag: **30.06.2022**

(51) Internationale Patentklassifikation (IPC):
G06N 3/04 (2023.01)       G06N 3/08 (2023.01)
B65G 15/22 (2006.01)      B65G 37/00 (2006.01)
B65G 43/10 (2006.01)

(52) Gemeinsame Patentklassifikation (CPC):
G06N 3/084; G06N 3/044

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft 80333 München (DE)**

(72) Erfinder:
• **TOKIC, Michel**
**88069 Tettnang (DE)**

• **VON BEUNINGEN, Anja**
**99085 Erfurt (DE)**
• **KÖRWER, Niklas**
**51065 Köln (DE)**
• **BISCHOFF, Martin**
**85653 Aying, Großhelfendorf (DE)**
• **GROSSENBACHER, David**
**160 00 Prag 6-Dejvice (CZ)**
• **LEIPOLD, Michael**
**90491 Nürnberg (DE)**

(74) Vertreter: **Siemens Patent Attorneys Postfach 22 16 34 80506 München (DE)**

(54) **MANAGEMENT VON PROZESSEN MIT ZEITLICHER ENTFALTUNG IN DIE VERGANGENHEIT, INSBESONDERE VON GLEICHZEITIG ABLAUFENDEN PROZESSEN IN INDUSTRIELLEN ANLAGEN, MIT HILFE VON NEURONALEN NETZEN**

(57)    Am Beispiel eines Logistiksystems, das mehrere parallele Förderstrecken für Stückgut umfasst, die in Förderrichtung jeweils in eine Vereinigungseinheit münden, wird beschrieben, wie die zeitlich und räumlich äußerst komplexe Steuerung einer solchen industriellen Anlage so mit Hilfe von Neuronalen Netzen nachgebildet werden kann, dass die zeitlichen und räumlichen Abhängigkeiten auch von dem Neuronalen Netz verlässlich erkannt werden. Bewirkt wird dies durch digitale Stoppuhren, die zusätzlich zu Sensordaten des Logistiksystems an das Neuronale Netz angelegt und immer dann auf einen Anfangswert zurückgesetzt werden, wenn Bewegungsmelder den Durchgang eines Pakets anzeigen.

FIG 2

**Beschreibung**

Neuronale Netze sind computerimplementierte, künstliche Werkzeuge auf dem Gebiet der Technik des maschinellen Lernens und der künstlichen Intelligenz. Ein einschlägiger Fachmann auf dem Gebiet der Digitaltechnologie versteht unter dem Fachbegriff "Neuronales Netz" ein künstliches Netz von Computern (genannt "Knoten" oder "Neuronen"), das eine genau bestimmte Form und Struktur aufweist. Ein computerimplementiertes, künstliches Neuronales Netz hat Eingangs- und Ausgangsknoten und je nach Ausgestaltung dazwischen liegende innere Knoten. Die Knoten sind untereinander in einer klar und eindeutig bestimmten Weise durch sogenannte Kanten miteinander verbunden. Jeder Knoten hat eine Empfangs- und eine Sendeseite. Auf der Empfangsseite werden von vorgelagerten Knoten Werte empfangen und im Knoten anhand von lokalen Gewichten korreliert, beispielsweise indem jeder empfangene Wert mit einem für diese Kante spezifischen Gewicht multipliziert und ggf. um einen vorgegebenen Wert erhöht wird und sodann alle derart gewichteten Werte zusammengezählt werden. Überschreitet die resultierende Summe einen bestimmten Wert (z.B. definiert durch eine sog. "Aktivierungsfunktion"), aktiviert sich der Knoten und der ermittelte Wert wird auf der Sendeseite ausgegeben (z.B. an nachgelagerte Knoten). Von einem nicht aktivierten Knoten wird z.B. eine Null oder gar kein Wert ausgegeben.

Im Betrieb werden an den Eingangsknoten Eingangsdaten angelegt, die von dem Netz wie vorstehend verarbeitet werden, was dazu führt, dass an den Ausgangsknoten Ausgangsdaten ausgegeben werden. Diese Arbeitsweise eines Neuronalen Netzes wird als "Vorhersage" oder "Inferenz" bezeichnet.

Die Konfiguration der lokalen Gewichte in den Knoten erfolgt durch sogenanntes "Training" bzw. "Lernen". Dabei wählt man zu Beginn den Startpunkt des Lernvorgangs zufällig, indem man die Gewichte mit Zufallszahlen belegt, da man nicht weiß, mit welcher Kombination von Gewichten ein Neuronales Netz eine ihm gestellte Aufgabe lösen kann. Anschließend gibt man Schritt für Schritt einen Teil der Trainingsdaten (z.B. 90 %) nacheinander in das Neuronale Netz ein und beobachtet, was das Neuronale Netz als Vorhersage ausgibt. Diesen Schritt nennt man auf "Forward Pass". Die Trainingsdaten laufen dabei vorwärts durch das Netz. In jedem Schritt vergleicht man die Ausgabe des Netzes mit dem Wunschergebnis, den das Netz für das jeweilige Trainingsdatum hätte ausgeben sollen. Durch Differenzbildung ermittelt man sodann, wie falsch das Neuronale Netz gelegen hat. Der derart berechnete Fehler wird nun benutzt, um mit einem Lernverfahren namens "Backpropagation" die im Neuronalen Netz gespeicherten Gewichte so zu ändern, dass das Ergebnis ein wenig besser wird. Dazu wird der Fehler ausgehend von den Ausgangsknoten in umgekehrter Richtung, d.h. in Richtung der Eingangsknoten, entlang der Struktur des Neuronalen Netzes auf die Knoten aufgeteilt, wodurch für jeden Knoten ein knotenspezifisches Wunschergebnis gebildet wird. Mit diesen knotenspezifischen Wunschergebnissen werden in den Knoten die Gewichte ein klein wenig auf- oder abjustiert. Dabei werden die Gewichte umso stärker justiert, desto weiter sie neben dem knotenspezifischen Wunschergebnis gelegen haben. Das Lernverfahren bestimmt dadurch, welcher Teil des Netzes den schwersten Fehler verursacht hat und steuert entsprechend gewichtet durch das Nachjustieren der Gewichte dagegen. Dies ist der sogenannte "Backward Pass", weil der Fehler rückwärts von der Ausgabe zur Eingabe durch das Netz fließt. Beim nächsten Mal liegt das Netz dann etwas weniger daneben und das Ganze wird wiederholt. Das muss man eine ganze Weile machen: Bei einfachen Aufgabenstellungen wie z.B. dem Erkennen von Bildern einige zehn- oder hunderttausendmal, bei schweren Aufgabenstellungen wie z.B. der Fußgängererkennung für ein selbstfahrendes Auto durchaus auch einige Milliarden Male. Ist der Fehler beim Training für dieses Trainingsdatum klein genug, geht man zum nächsten Trainingsdatum und ist der Fehler für alle Trainingsdaten klein genug, dann hört man mit dem Trainieren auf. Andere Reihenfolgen in der Verwendung der Trainingsdaten und anderen Abbruchkriterien für das Training sind auch möglich.

Mit den verbliebenen Trainingsdaten, die bislang nicht für das Training verwendet worden sind (z.B. 10 %) wird nun die Qualität des Trainings überprüft. Diese Trainingsdaten hat das Netz noch nie gesehen und konnte sie deshalb nicht "auswendig lernen", d.h. in den Gewichten durch Training einspeichern.

Ist das Netz in der Lage, auf eine akzeptable Menge dieser Trainingsdaten das dazu passende Wunschergebnis zu liefern, war das Training des Neuronalen Netz aller Voraussicht nach erfolgreich. Das Training kann beendet und der operative Betrieb des Neuronalen Netzes aufgenommen werden. Das Neuronale Netz kann dabei während des Betriebs weiterhin durch Training nachjustiert werden (z.B. wenn Anwender auswählen, auf welchen Bildern man bestimmte abgefragte Gegenstände sieht, das Neuronale Netz aber deren Vorhandensein nicht erkannt hat).

Ist das Netz jedoch nicht in der Lage, auf eine akzeptable Menge dieser Trainingsdaten das dazu passende Wunschergebnis zu liefern, steht man vor der meist höchst anspruchsvollen technischen Aufgabe, nach dessen Ursache und/oder Lösungen zu suchen, bei denen das Netz auf eine akzeptable Menge dieser Trainingsdaten das dazu passende Wunschergebnis liefert.

Das Verhalten eines komplexen Neuronalen Netzes zu beschreiben kann wegen seiner Vielschichtigkeit und mehrdimensionalen Struktur sehr herausfordernd sein. Aus der Mathematik entlehnte Begriff können dafür ein gut funktionierendes Beschreibungswerkzeug sein. So kann man z.B. den Zustand eines Neuronalen Netzes zu einem bestimmten Zeitpunkt gut mit einem Zustandsvektor erfassen, in dem für jeden Knoten ein Eintrag vorgesehen ist. Die Summe aller gelernten Gewichte lässt sich derweil gut mit Matrizen darstellen. Das dynamische Verhalten eines Neuronalen Netzes über die Zeit kann man sodann gut mit Hilfe von Multiplikationen des Zustandsvektors mit der Gewichtsmatrix beschreiben.

Neuronale Netze werden - vielleicht begünstigt durch ihre gute mathematische Beschreibbarkeit - gelegentlich als ein Beispiel für Rechenmodelle und Algorithmen gesehen, die per se abstrakter mathematischer Natur sein sollen. Diese Sichtweise bereitet aber sprachlich und sachlich Schwierigkeiten. Sprachlich ist ein Netz ein Netz und ein Modell ein Modell. Das eine wird nicht zum anderen, nur weil man es behauptet oder so sehen möchte. Sachlich ist ein Neuronales Netz für den einschlägigen Fachmann auf dem Gebiet der Digitaltechnologie in sprachlicher Übereinstimmung mit den Worten, wie eingangs beschrieben, ein künstliches "Netz" von computerimplementierten Knoten. Auch wenn es verlockend und vielleicht sogar nachvollziehbar sein mag, darf die Verwendung mathematischer Beschreibungsmittel nicht dazu führen, dass man Neuronale Netze mit Mathematik gleichsetzt, nur weil sich diese Netze gut mit aus der Mathematik entlehnten Begriffen beschreiben lassen.

Diese wichtige Differenzierung spiegelt sich auch in der Entscheidung T 1924/17 vom 29.07.2019 der Beschwerdekammer 3.5.07 des Europäischen Patentamts wider, gemäß deren Absatz 19.1 unter Mathematik und insbesondere Mathematik "als solche" lediglich folgendes zu verstehen ist:

- die abstrakte Wissenschaft von Zahl, Menge und Raum,
- die Deduktion und Beweisbarkeit mathematischer Theoreme ausgehend von einem Satz mathematischer Axiome,
- ein Spiel, das nach bestimmten einfachen Regeln mit bedeutungslosen Markierungen auf Papier gespielt wird.

Neuronale Netze sind somit keine Mathematik. Sie bilden stattdessen ein eigenständiges Gebiet der Technik mit für sie spezifischen technischen Problemen und einer Vielzahl von möglichen technischen Lösungen dieser Probleme.

Wie auf jedem Gebiet der Technik besteht auch hier die Aufgabe, zumindest ein technisches Problem zu erkennen und zumindest eine technische Lehre zu dessen Lösung anzugeben.

Dieser Auftrag wird durch das vorliegende Dokument und hier vor allem durch den nachfolgenden Teil der Beschreibung und die Zeichnungen erfüllt. Welche technische Lehre dabei als Erfindung unter Schutz steht, ergibt sich aus den Ansprüchen.

Obwohl Neuronale Netze als eigenes Gebiet der Technik häufig universell angewendet werden können und nicht auf eine bestimmte Anwendung beschränkt sind, kann es gleichwohl der besseren Verständlichkeit dienen, wenn man ihre spezifischen Probleme und Lösungen anhand einer konkreten Anwendung beschreibt. Vorliegend wird deshalb im Weiteren das Management von Prozessen mit zeitlicher Entfaltung in die Vergangenheit, insbesondere von gleichzeitig ablaufenden Prozessen in industriellen Anlagen - insbesondere Industrieanlagen bestehend aus einzeln ansteuerbaren Fließbandabschnitten - mit Hilfe von Neuronalen Netzen beschrieben. Dies dient wie gesagt aber nur der besseren Illustration und soll keinesfalls als Beschränkung auf diese Anwendung verstanden werden.

Industrieanlagen bestehend aus einzeln ansteuerbaren Fließbandabschnitten werden oftmals in der Intralogistik oder allgemein im Produktionsumfeld verwendet. Beispielsweise bestehen Paketsortieranlagen aus einem oder mehreren Fingern, die wiederum mehrere hintereinander geschaltete Fließbandabschnitte beinhalten. Paketsortieranlagen werden u.a. zur Vereinzelung von Paketen unterschiedlicher oder gleicher Größen verwendet. Ein anderes Beispiel stellt eine Verpackungsmaschine dar, bei der die Produkte auf einer Förderstrecke beschleunigt / abgebremst werden müssen, um das Produkt passend zur Taktfrequenz einer Schlauchbeutelmaschine am Ende der Förderstrecke anzuliefern.

Ein "Dynamic Gapper" ist dabei eine geregelte Antriebsapplikation, die in der Intralogistik genutzt wird. Bei dieser Applikation sollen Pakete, die in der Regel von zwei oder mehreren parallelen Förderstrecken in einer Richtung gefördert werden, auf eine einzige Ausgangsförderstrecke zusammengeführt werden. Dabei sollen die Pakete, die in undefinierten Abständen auf den zwei oder mehr parallelen Förderstrecken liegen, mittels einer Vereinigungseinheit auf die Ausgangsförderstrecke sortiert und gleichzeitig in definierte Abstände gebracht werden.

Das Vereinen der Pakete und die Erzeugung definierter Abstände wird mittels mehrerer Teilförderbänder jeweiliger Förderstrecken erzielt. Die jeweiligen Teilförderbänder werden von Getriebemotoren angetrieben und von einem Frequenzumrichter gesteuert. Die Sollwerte für die Geschwindigkeiten jeweiliger Teilförderstrecken werden von einer Steuerung vorgegeben. Dabei werden Positionen der Pakete auf den Teilförderstrecken sensorisch detektiert und in der Steuerung verarbeitet. Die Position zwischen den Paketen wird in der Regel durch PI-Regler beeinflusst, die zwischen jeweils zwei Paketen agieren. Aufgrund der vorliegenden Informationen werden die Teilförderstrecken von der Steuerung unterschiedlich beschleunigt und verzögert.

Aufgrund der Mehrzahl an parallelen Förderstrecken und jeweils mehrerer Teilförderbänder, die unabhängig voneinander zu beschleunigen und verzögern sind, ist die Steuerung regelungstechnisch aufwändig. Die Optimierung aufgrund verschiedener Paketgrößen und -beschaffenheiten ist komplex. Die Anpassung des Regelungsprozesses bei unterschiedlichen mechanischen Aufbauarten ist groß. Wird z.B. die Anzahl der Förderstrecken oder die Länge der einzelnen Teilförderstrecken verändert, so hat dies wesentlichen Einfluss auf den Regelungsprozess und bedingt Anpassungen in der Steuerung.

Die Bestimmung der optimalen Geschwindigkeiten der einzelnen Fließbänder zu jedem Zeitpunkt und jeder beliebigen Situation (Anzahl, Größen und Positionen der einzelnen Pakete) ist weiterhin für den Fall technisch sehr herausfordernd, dass kein physikalisches Modell (z.B. Simulation) der Anlage vorliegt.

Als Grundlage für die Lösung dieser Aufgabe kann ein digitaler Zwilling in Form eines physikgetreuen Simulationsmodells dienen. Diese können mittels digitaler Werkzeuge wie NX MCD (Mechatronic Concept Design) der Firma Siemens Digital Industries Software Corp. (ehem. Siemens Product Lifecycle Management Software Inc., kurz Siemens PLM Software) oder Unity Simulation Pro der Firma Unity Software Inc. (firmierend als Unity Technologies) erstellt werden.

Eine physikgetreue Simulation mit NX MCD ermöglicht beispielsweise zusätzlich zu einer Modellierung, bei der die Geometrie gezeigt wird, eine kinematische Bewertung des Modells in einer Umgebung, in der physikalische Effekte wirken (z.B. Kräfte, Trägheiten, Beschleunigungen). Die Validierung wird durch die Wiederverwendungsbibliothek unterstützt, aus der Komponenten zum Funktionsmodell hinzufügen können. Die Komponenten enthalten weitere Informationen wie zum Beispiel Geometrien, Parameter oder Kinematiken. Auf diese Weise entsteht schrittweise eine physikbasierte, interaktive Simulation zur Verifizierung des zukünftigen Maschinenbetriebs.

Es wurde erkannt, dass physikgetreue Simulationen zuweilen auch Schwierigkeiten und Probleme bereiten können:

a) Physiksimulationen benötigen meist einen Experten, der das System gut kennt bzw. einen Baukasten aus bereits simulierten Einzelteilen (z.B. verschiedene Antriebsmotor-Modelle). Stehen diese nicht zur Verfügung, kann es unmöglich werden, diese Simulationen zu erstellen.

b) Bei der Übergabe von Paketen zwischen Fließbändern können physikgetreue Simulationen zuweilen unzureichend genau sein.

c) Die physikgetreue Modellierung einer komplexen Anlage kann sehr zeitaufwendig und damit kostenintensiv sein.

d) Bei fehlendem Zugriff auf die Steuerung eines Produkts kann es ebenfalls unmöglich sein, auf Grund fehlenden Wissens über die Details der Steuerung deren Verhalten mit Hilfe einer physikgetreuen Simulation nachzubilden. Dies kann z.B. dann eintreten, wenn ein Produkt eines Wettbewerbers simuliert werden soll, auf dessen Steuerung man keinen Zugriff hat, was z.B. bei einer computerimplementierten Steuerung dann der Fall sein kann, wenn nicht deren Source Code sondern nur maschinenlesbarer Code vorliegt und dessen Decompilierung aus irgendeinem Grund (z.B. vertragliches Verbot, technische Sperre) nicht möglich ist.

Zur Lösung zumindest eines dieser Probleme wird vorgeschlagen, einen digitalen Zwilling mit Hilfe von Neuronalen Netzen zu bewirken.

Das Neuronale Netz wird dabei an vorhandene Sensoren angeschlossen, mit denen der Ist-Zustand der Förderbänder erfasst wird. Dabei ist der Begriff "Sensor" weit zu verstehen und kann z.B. auch aktuell anliegende Steuerkommandos umfassen. Die Eingabedaten des Neuronalen Netzes können dann z.B. folgende Daten umfassen:

- Zustände von Lichtschranken, mit denen an bestimmtem Stellen erfasst wird, ob gerade ein Paket vorhanden ist

- Ist-Geschwindigkeit der Antriebsmotoren der Förderbänder

- Soll-Geschwindigkeit der Antriebsmotoren der Förderbänder, die z.B. aus Steuerkommandos abgeleitet werden kann, die von einer Steuerung an die Antriebsmotoren übermittelt werden.

Die Aufgabe des Neuronalen Netzes ist dann, auf Basis dieser Daten eine Vorhersage zu treffen, welche Werte diese Parameter voraussichtlich zu einem bestimmten Zeitpunkt in der Zukunft haben werden.

Bei der Lösung dieser Aufgabe treten weitere, unerwartete technische Probleme auf. Diese muss man zunächst erkennen und deren Ursache ergründen. Sodann sind Lösungen zu suchen.

Beispielsweise können Neuronale Netze nur dann mit hinreichender Genauigkeit trainiert werden, wenn ausreichend Trainingsdaten vorliegen. Liegen nur sehr wenige Trainingsdaten vor, kann der gesamte Zustandsraum eines Neuronalen Netzes nicht ausreichend dicht mit Trainingsdaten abgedeckt werden. Dies führt dazu, dass Neuronale Netze in den Zwischenräumen zwischen den Trainingsdaten sehr stark interpolieren müssen. Daraus können erhebliche Ungenauigkeiten, Overfitting und schlechte Generalisierung resultieren.

Es wurde erkannt, dass eine mögliche Lösung dieses technischen Problems darin besteht, eine möglichst enge zeitliche Taktung der Simulation von ca. 10ms (oder weniger) anzustreben, um darüber möglichst viele und vor allem zeitlich eng beieinander liegende Eingabedaten für den Betrieb und das Training zu generieren.

Die Aufgabe des Neuronalen Netzes ist in diesem Fall, auf Basis der Eingabedaten eine Vorhersage zu treffen, welche Werte diese Parameter voraussichtlich im nächsten Takt der angestrebten engen zeitlichen Taktung von 10ms haben werden.

Überraschenderweise zeigt sich, dass Neuronale Netze nicht in der Lage sind, auf Basis der obigen Eingabedaten die erwünschten Vorhersagen verlässlich zu treffen, wenn mehrere Teilförderstrecken relativ zueinander zu koordinieren sind.

In diesem Fall schließt man die Sensoren von zumindest zwei bis zu - normalerweise - allen zu korrelierenden Teilförderstrecken an ein Neuronales Netz an und trainiert mit Hilfe von tatsächlichen Zuständen der Sensoren, die wie vorgeschlagen z.B. alle 10ms erfasst werden, die Gewichte des Neuronalen Netzes. Dabei bilden die Sensordaten im Zeitpunkt t die Eingabedaten des Neuronalen Netzes, das daraus als Ausgabedaten voraussichtliche Sensordaten im Zeitpunkt t+1 ableitet, wobei der Abstand zwischen t und t+1 beliebig gewählt werden und wie vorgeschlagen bei sehr engmaschigen 10ms liegen kann. Diese Ausgabedaten werden mit den tatsächlich im Zeitpunkt t+1 vorliegenden Sensordaten verglichen.

Das Maß der Übereinstimmung der Vorhersagen mit der Realität bildet einen Qualitätsparameter des Neuronalen Netzes, unterscheidet also z.B. - ebenso wie bei vielen anderen Werkzeugen, bei denen es auf deren Präzision ankommt - qualitativ hochwertige, weil besonders präzise Vorhersagen treffende Neuronale Netze von solchen mit niedrigerer Qualität.

Während des Trainings des Neuronalen Netz werden die Abweichungen weiterhin dazu verwendet, das Neuronale Netz, meist durch Anpassung von dessen Gewichten, zu konfigurieren.

Ein anderer, von der Präzision der Vorhersage unabhängiger, aber vor allem bei der vorgeschlagenen engen zeitlichen Taktung von 10ms nicht minder wichtiger Qualitätsparameter kann die Verarbeitungsgeschwindigkeit des Neuronalen Netzes sein. Als grobe Daumenregel ist sie für eine geringe Anzahl von Eingabedaten und/oder langsam laufende Prozesse oft von nachrangiger Bedeutung und kann mit zunehmender Komplexität erheblich an Bedeutung gewinnen.

Es zeigt sich nun überraschenderweise, dass das Neuronale Netz bei dieser Anordnung und diesem Vorgehen nicht in der Lage ist, auf Basis der Sensordaten im Zeitpunkt t verlässlich eine hinreichend genaue Vorhersage der voraussichtlichen Sensordaten im Zeitpunkt t+1 zu erstellen.

Nach einer Erkenntnis liegt dies unter anderem an einem weiteren technischen Problem von Neuronalen Netzen, dass die Behandlung von dynamisch über die Zeit ablaufenden Prozessen für sie sehr schwierig ist. Neuronale Netze bilden Eingabedaten gemäß ihrer Struktur und ihren durch Training gelernten Gewichten auf Ausgabedaten ab. Diese Abbildung ist für identische Eingabedaten grundsätzlich immer gleich, solange sich die Struktur des Netzes und die Gewichte nicht ändern. Es wurde erkannt, dass Neuronale Netze eingangs beschriebener Struktur unter Nutzung der vorstehenden Eingabedaten nicht erkennen können, wann in der Vergangenheit ein Paket von einer Teilförderstrecke erfasst und wie weit es aktuell bereits fortbewegt worden ist.

Gleiches gilt, wenn Neuronale Netze eine zeitliche Differenzierung zwischen mehreren hintereinander und/oder parallel geschalteten Teilförderstrecken dahingehend vornehmen sollen, welche beschleunigt und welche abgebremst werden müssen, damit z.B. eine Kollision von parallel auf gleicher Höhe transportierten Paketen in der Vereinigungseinheit und/oder eine Kollision mit Paketen, die von einer nachgelagerten Teilförderstrecke abgebremst werden, verhindert wird. Es kann hier die für Neuronale Netze paradoxe Situation entstehen, dass eine bestimmte Teilförderstrecke bei identischen Eingabedaten manchmal beschleunigt, manchmal abgebremst und manchmal unverändert zu betreiben ist.

Nach einer Erkenntnis hängt dies davon ab, wie sich die Situation an vor-, nach- oder nebengeordneten Teilförderstrecken darstellt. Feinste Unterschiede im Fortschritt des Transports der einzelnen Pakete sind für die Entscheidung der Steuerung ausschlaggebend, welche Pakete beschleunigt, abgebremst oder unverändert weiter transportiert werden.

Diese Unterschiede sind für ein Neuronales Netz bei isolierter Betrachtung einer bestimmten Teilförderstrecke nicht erkennbar. Sie sind für das Neuronale Netz auch nicht bei Gesamtbetrachtung aller Teilförderstrecken und einer engen Taktung von 10ms erkennbar. Das Netz sieht anhand seiner Eingabedaten immer nur den jeweils aktuellen Zustand zum Zeitpunkt der Abtastung der Sensordaten. Wie lange dieser Zustand schon andauert, ist aus den erfassten Sensordaten jedoch nicht erkennbar.

Man kann deshalb auch nicht ohne weiteres ein Neuronales Netz mit Markov Eigenschaften realisieren, bei dem sich für die Menge von zeitlich, z.B. im Abstand von 10ms erfassten, aufeinanderfolgenden Sensordaten die Wahrscheinlichkeit für den nächsten Zustand der Sensordaten, der von dem Neuronalen Netz ermittelt wird, nur vom unmittelbar vorausgehenden Zustand abhängt und nicht auch noch von noch früheren.

Letztendlich führt diese Dynamik zu einem Widerspruch mit dem Paradigma, dass die Vorhersage eines Neuronalen Netzes für identische Eingabedaten grundsätzlich immer gleich ist, solange sich die Struktur des Netzes und die Gewichte nicht ändern. Das Neuronale Netz stößt beim Training für identische Eingabedaten immer wieder auf sich zum Teil diametral widersprechende Trainingsvorgaben. Für identische Eingabedaten des Neuronalen Netz müssen identische Teilförderstrecken manchmal beschleunigt, manchmal verzögert und manchmal unverändert belassen werden. Die Konfiguration der Gewichte hängt dann von zufälligen Parametern wie z.B. der Reihenfolge oder der Auswahl der Trainingsdaten ab.

Man kann sich das bildlich gesprochen in etwa so vorstellen, dass die innere Struktur des Neuronalen Netzes während des Trainings zu "oszillieren" beginnt. Sie neigt sich zufällig - z.B. je nachdem, wie die Trainingsdaten ausgebildet sind - mal in die eine, mal in die andere Richtung, ggf. sogar zwischen unterschiedlichen Richtungen hin und her.

Diese Diffusität setzt sich nach Abschluss des Trainings fort. Auch im Betrieb ergeben sich immer wieder Konstellationen, in denen die Vorhersagen des Neuronalen Netz nicht nur ein klein wenig, sondern deutlich vom tatsächlichen Verhalten der Steuerung abweichen.

Eine Aufgabe besteht nun darin, für die erkannten Probleme eine Lösung zu finden. Besonders herausfordernd ist diese technische Aufgabe dann, wenn eine enge zeitliche Taktung von ca. 10ms angestrebt wird, da in diesem Fall Informationen über viele Zeitschritte hinweg übertragen werden müssen, wodurch das Simulationsmodell sehr komplex werden kann.

Zur Lösung des Zeitproblems wird für das als Anwendungsbeispiel für die Neuronalen Netze verwendeten Paketsortieranlagen vorgeschlagen, für jeden Sensor, der z.B. mittels einer Lichtschranke das Vorhandensein eines Pakets überprüft, als weiteres Eingangsdatum des Neuronalen Netzes eine Art "Stoppuhr" vorzusehen, die immer dann auf einen Anfangswert (bei einer Stoppuhr üblicherweise "Null") zurückgesetzt wird, wenn der zugeordnete Sensor eine Veränderung seines Zustands anzeigt. Dieser Zustand dieses Sensors ist bei einer Lichtschranke üblicherweise binär, hat also genau zwei Zustände:

(1) "Lichtschranke unterbrochen" =
"Im Moment ist ein Paket da"

(2) "Lichtschranke nicht unterbrochen" =
"Im Moment ist kein Paket da"

Losgelöst von diesem Anwendungsbeispiel erkennt man, dass sich diese Lösung bis auf einen einzigen als Bewegungsmelder ausgestalteten Sensor und eine einzige ihm geordnete Stoppuhr reduzieren lässt. Dabei wird die Stoppuhr immer dann zurückgesetzt, wenn von dem Sensor eine Bewegung detektiert wird.

Nach dem Zurücksetzen startet die Stoppuhr von Neuem und misst das Fortschreiten der Zeit. Der in jedem Vorhersagemoment aktuell anliegende Wert der Stoppuhr ist sodann ein Indikator dafür, wie weit das Auslösen des Sensors in der Vergangenheit zurückliegt. Durch diese technische Lehre lässt sich diese Information über viele Zeitschritte hinweg übertragen und für ein Neuronales Netz eine zeitliche Entfaltung in die Vergangenheit nachvollziehen.

Eine direkte Entsprechung mit einer Stoppuhr lässt sich erreichen, wenn man als zusätzlichen Eingabewert eine Sägezahnkurve anlegt, die nach jedem Zurücksetzen von Neuem startet und bei der vorgeschlagenen engen Taktung von 10ms in jedem Vorhersagezyklus linear um einen konstanten Wert verändert wird. Auf diese Weise kann diese zeitliche Information mit konstantem Aufwand über viele Zeitschritte hinweg übertragen werden. Dies ergibt im Ergebnis je nach Ausgestaltung des Veränderungswertes eine linear steigende oder fallende Sägezahnkurve. Eine Variante ist dabei eine Kurve, die jeweils auf "0" zurückgesetzt und in jedem Zyklus um "+1" verändert wird.

Alternative Ausgestaltungen, bei denen die Stoppuhr anders als linear über die Zeit hinweg verändert wird, sind denkbar. Sie kann beispielsweise als steigende / fallende Flanke von Lichtschrankensignalen und dabei nicht nur als lineare, sondern auch als exponentielle Sägezahnfunktion modelliert werden. Oder sie kann auf Basis der Unterschiede zwischen einer Bandposition zum Zeitpunkt einer fallenden oder steigenden Flanke und dem jeweils aktuellen Zeitpunkt verändert werden. So können unterschiedliche Abstände von Paketen für das Neuronale Netz erkennbar werden, was vor allem dann wichtig ist, wenn dieser Aspekt auch von der Steuerung berücksichtigt wird, die von dem Neuronalen Netz als digitaler Zwilling nachgebildet werden soll.

Ebenso kann die Stoppuhr nach dem Verstreichen einer gewissen Zeit angehalten werden. Die Überlegung ist dabei, dass z.B. bei der betrachteten Paketsortieranlage die Steuerung vor allem kurz nach der Detektion einer Bewegung eine Entscheidung darüber trifft, ob ein Paket relativ zu anderen Paketen gesehen schneller, langsamer oder mit gleichbleibender Geschwindigkeit weiter transportiert wird. Wenn diese Entscheidung einmal getroffen ist, bleibt sie für den jeweiligen Transportabschnitt meist so lange unverändert, bis durch das Auslösen anderer Bewegungsmelder ggf. eine Korrektur erforderlich wird. Dafür das Erkennen dieser Situation sind dann aber andere Stoppuhren ursächlich. Ein Anhalten der Stoppuhr kann z.B. in einem großen System mit einer hohen Anzahl von Stoppuhren mit Blick auf die Verarbeitungsgeschwindigkeit eines Neuronalen Netzes und eine eventuell erforderliche Echtzeitfähigkeit von erheblichem Vorteil sein.

Weiterhin kann für einen z.B. als Bewegungsmelder ausgebildeten Sensor auch mehr als eine Stoppuhr vorgesehen werden. Mit Blick z.B. auf Paketsortieranlagen ist es vorteilhaft, zwei Stoppuhren vorzusehen und dabei die erste zu starten, wenn ein Paket detektiert wird und die zweite, wenn das Paket den Sensor passiert hat. So kann für ein Neuronales Netz z.B. über die Korrelation des Unterschieds zwischen den beiden Uhren und ggf. der Geschwindigkeit des Teilförderbands (z.B. abgeleitet aus der Geschwindigkeit des Getriebemotors dieses Teilförderbands) die Größe eines Pakets erkennbar werden. Dieses Wissen ermächtigt ein Neuronales Netz beispielsweise, das Verhalten einer Steuerung nachzubilden, die Vorgaben wie z.B. bestimmte, definierte Abstände zwischen Paketen vor einer Vereinigungseinheit oder vor eine Schlauchbeutelmaschine einer Verpackungsmaschinen berücksichtigt.

Ein mit derartigen Neuronalen Netzen gebildeter digitaler Zwilling kann unter anderem zu folgenden Zwecken eingesetzt werden und/oder folgende Vorteile haben:

- Simulation des Standardbetriebs einer Anlage, um sicherzugehen, dass die Spezifikation erfüllt ist;

- Ermittlung des Durchsatzes der Anlage;

- Simulation von Sonderfällen im Betrieb der Anlage ohne Investition in spezielle Hardware zu tätigen bzw. ohne potenziellen Schaden an Anlagenkomponenten anzurichten;

- Ablauf des Simulationsmodells auf einem Edge-Device parallel zum Anlagenbetrieb und dabei Erkennen abnormaler Betriebszustände;

- Optimierung der Anlagenstruktur (z.B. Anzahl der Finger, Fließbänder);

- Bestimmung einer optimalen Steuerung der Anlage unter Verwendung von Reinforcement Learning. Besonders vorteilhaft für die optimale Steuerung mittels Reinforcement Learning ist, wenn hierfür ein Neuronales Netz mit Markov Eigenschaft verwendet wird.

- Prognosemodelle basierend auf Neuronalen Netzen können rein datenbasiert sein, d.h. keine Detailkenntnisse über z.B. das Systemverhalten von Antriebsmotoren, sondern lediglich Daten aus der Vergangenheit oder von baugleichen Anlagen benötigen, während physikalische Simulationsmodelle exaktes Wissen über die Anlagenkomponenten und deren Umgebung voraussetzen. Die Erstellung physikalischer Simulationsmodelle komplexer Anlagen mit Programmen wie NX MCD oder Unity benötigt deshalb in der Regel einen Experten, der viel Zeit braucht, um das exakte Verhalten der Anlage abzubilden, während die Erstellung eines Prognosemodells durch Training eines Neuronalen Netzes mittels Supervised Learning automatisiert erfolgen kann. Dies macht eine Erstellung auch kostengünstiger, weil ohne Experten möglich.

- Ein durch Training eines Neuronalen Netzes mittels Supervised Learning erstelltes Prognosemodell kann jederzeit nachtrainiert werden, wenn die Genauigkeit des Modells nicht mehr zufriedenstellend ist.

- Ein durch Training eines Neuronalen Netzes erstelltes Prognosemodell basiert auf realen Daten und lernt schwierig zu simulierende Übergänge an den Förderbandabschnitten mit.

- Falls eine Anlagenkomponente (z.B. Antriebsmotor) getauscht werden soll, für die es noch kein physikalisches Simulationsmodell mit z.B. NX MCD oder Unity gibt, kann ein rein datenbasiertes Prognosemodell deutlich schneller und damit kostengünstiger erstellt werden.

- Durch Verwendung von Neuronalen Netzen können Anlagenkomponenten verschiedener Hersteller verbaut und sodann hierfür ein Prognosemodell erstellt werden, für die es kein physikalisches Simulationsmodell mit z.B. NX MCD oder Unity gibt und sich mangels Zugriffes auf die Daten der Hersteller auch kein physikalisches Simulationsmodell erstellen lässt. So lassen sich optimale Steuerungen für (Konkurrenz-) Anlagen entwickelt werden, für die es keine physikalischen Simulationsmodelle gibt.

- Bei Einsatz auf einem Edge-Device kann ein Neuronales Netz parallel zum Anlagenbetrieb laufen und abnormale Betriebszustände erkennen wie z.B. eine lückenhafte Datenlage eines durch ein Neuronales Netz bewirkten Prognosemodells oder ein Defekt einer Anlagenkomponente (z.B. ein Antriebsmotor). Es können auch Alarmdaten generiert werden, wenn die Realität stark von der Prognose abweicht.

- Durch Nutzung von rekurrenten Neuronalen Netzes (RNN) mit Long short-term memory (LSTM) Modulen kann verschwindenden Gradienten aufgrund einer sehr langen zeitlichen Entfaltung (z.B. entspricht eine Zeitspanne von 4 Sekunden bei einer Taktung von 10ms einer zeitlichen Entfaltung über 400 Vorhersagezyklen) entgegengewirkt werden.

- Durch eine hohe zeitliche Entfaltung eines RNNs in die Vergangenheit ergibt sich eine sehr genaue Auflösung.

- Durch Berücksichtigung von Förderbandlängen kann man ein generisches Modell für alle Anlagen unabhängig von deren Förderbandlängen erhalten. Dadurch wird eine Generalisierung ermöglicht.

- Ein besonders schöner Vorteil von Neuronalen Netzen liegt darin, dass Förderband-Übergänge, die durch eine Verkettung von zwei physikalischen Einzelmodellen entstehen, in physikalischen Simulationsmodellen zu Ungenauigkeit neigen, wären das Prognosesystem durch Training lernt, diese Zusammenhänge genau abzubilden.

- Weitere Vorteile, die durch eine automatisierte Erstellung von durch ein Neuronales Netz bewirkten Prognosemodellen ermöglicht werden:

    o Automatisierte Exploration verschiedener Anlagendesigns;

    o Schnelle Adaption des Modells auf neue Betriebsmodi, Anlagenkomponenten oder veränderte Situationen;

    o Transferlearning zwischen verschiedenen Anlagen.

Vorteilhaft erfolgt eine Realisierung der Neuronalen Netze durch ein Computerprogramm mit Programmcode, der z.B. auf einem nicht-flüchtigen, maschinenlesbaren Träger oder in einer Cloud im Internet gespeichert sein kann. Das Computerprogramm realisiert die vorstehenden Ausführungsformen, wenn der Programmcode auf einem Computer ausgeführt wird.

Ein besseres Verständnis der vorgeschlagenen technischen Lehre ergibt sich aus der folgenden detaillierten Beschreibung in Verbindung mit den folgenden Zeichnungen. Es zeigen dabei:

FIG 1    eine schematische Darstellung eines Logistiksystems mit einer Recheneinheit zur Durchführung des erfindungsgemäßen Verfahrens zur computerimplementierten Konfiguration der darin verwirklichten geregelten Antriebsapplikation;

FIG 2    eine schematische Darstellung der durch die Recheneinheit durchgeführten Verfahrensschritte.

FIG 3    eine Ausgestaltung der Recheneinheit

FIG 4    eine weitere Ausgestaltung der Recheneinheit

FIG 5    ein dynamisches Verhalten des Logistiksystems sowie dessen Vorhersage durch ein Neuronales Netz mit mehreren linearen Stoppuhren

FIG 6    ein dynamisches Verhalten eines rekurrenten Neuronalen Netzwerks

FIG 7    ein dynamisches Verhalten eines weiteren rekurrenten Neuronalen Netzwerk

FIG 8    ein alternatives dynamisches Verhalten von Stoppuhren für ein Neuronales Netz

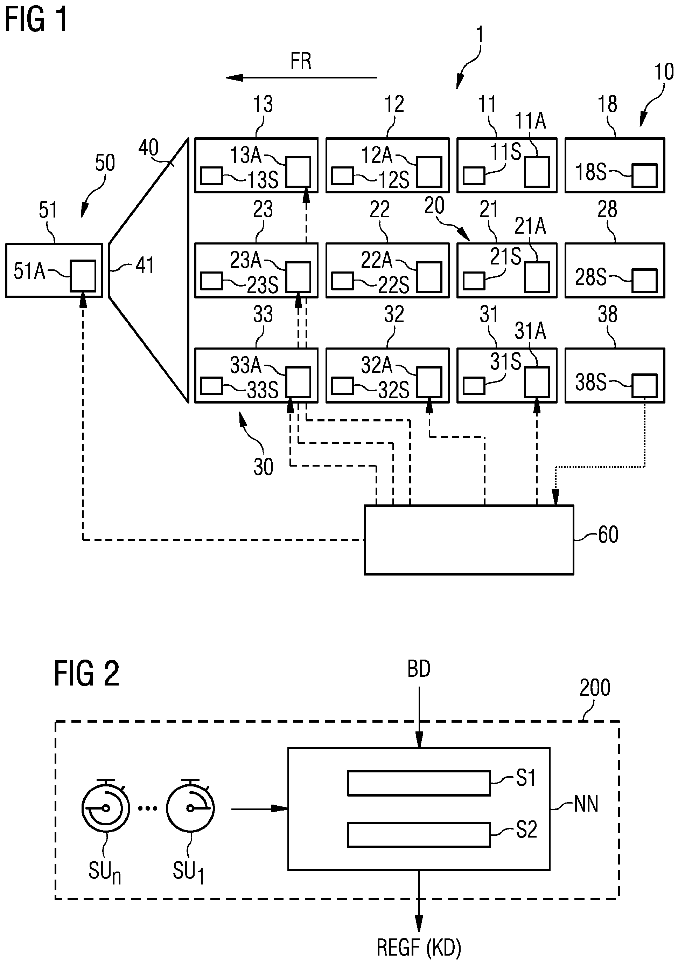

FIG 1 zeigt eine schematische Darstellung eines Logistiksystems 1 mit einer geregelten Antriebsapplikation. Das Logistiksystem 1 umfasst beispielhaft drei parallel zueinander verlaufende Förderstrecken 10, 20, 30, auf denen jeweils in einer von rechts nach links verlaufenden Förderrichtung FR Stückgut, insbesondere Pakete, gefördert werden können. Jede der in diesem Beispiel gleichlangen (können aber auch unterschiedlich lang sein) und auch als Finger bezeichneten Förderstrecken 10, 20, 30 umfasst eine Mehrzahl an Teilförderstrecken 11-13, 21-23, 31-33. Die Anzahl der Teilförderstrecken pro Förderstrecke 10, 20, 30 ist im vorliegenden Ausführungsbeispiel gleich (wobei auch dies nicht zwingend ist und unterschiedlich sein kann). Auch die Teilförderstrecken 11-13, 21-23, 31-33 einer jeweiligen Förderstrecke 10, 20, 30 können gleich lang sein oder unterschiedliche Längen aufweisen.

Jeder der Teilförderstrecken 11-13, 21-23, 31-33 ist jeweils ein Antrieb 11A-13A, 21A-23A, 31A-33A zugeordnet. Durch entsprechende Ansteuerung der Antriebe 11A-13A, 21A-23A, 31A-33A mittels einer Recheneinheit 60 können die Teilförderstrecken 11-13, 21-23, 31-33 individuell beschleunigt oder verzögert werden.

Am Ende der Förderstrecken 10, 20, 30, d.h. in Förderrichtung FR, ist eine Vereinigungseinheit 40 angeordnet, auf welche die in Förderrichtung FR letzten Teilförderstrecken 13, 23, 33 die von ihnen transportierten Stückgüter übergeben. An einem Ausgang 41 der Vereinigungseinheit 40 ist eine einzige Ausgangsförderstrecke 50 angeordnet.

Diese kann aus einer oder mehreren Teilförderstrecke(n) 51 bestehen. Die eine oder mehrere Teilförderstrecke(n) 51 werden wiederum unter Steuerung der Recheneinheit 60 von einem Antrieb 51A angetrieben.

Die Beschleunigung und Verzögerung jeweiliger Teilförderstrecken vermittels geeigneter Steuersignale für die Antriebe 11A-13A, 21A-23A, 31A-33A ermöglicht es, auf den parallelen Förderstrecken 10, 20, 30 transportiertes Stückgut zeitlich versetzt auf die Vereinigungseinheit 40 zu transportieren. Die Vereinigungseinheit 40 ist dadurch in die Lage versetzt, das Stückgut auf die Ausgangsförderstrecke 50 derart zu fördern, dass jeweils zwei zeitlich aufeinanderfolgende Stückgüter einen vorgegebenen definierten Abstand zueinander aufweisen.

Um die Recheneinheit 60 in die Lage zu versetzen, geeignete Ansteuersignale zum Beschleunigen und Verzögern der Antriebe 11A-13A, 21A-23A, 31A-33A abzugeben, ist eine jeweilige Teilförderstrecke 11-13, 21-23, 31-33 mit einer Anzahl an jeweiligen Sensoren 11S-13S, 21S-23S, 31S-33S versehen. Die Sensoren 11S-13S, 21S-23S, 31S-33S umfassen insbesondere Lichtschranken zur Ermittlung einer jeweiligen Transportgeschwindigkeit, Länge und/oder Position eines Stückguts und/oder dessen Abweichung von einer erwarteten Position. Die Sensoren umfassen optional z.B. Drehzahlsensoren zur Detektion der Drehzahl der Antriebe 11A-13A, 21A-23A, 31A-33A, Stromsensoren zur Detektion der Motorströme der Antriebe 11A-13A, 21A-23A, 31A-33A, usw.

Die Zufuhr der Stückgüter auf die Förderstrecken 10, 20, 30 erfolgt über jeweilige Übergabeeinheiten 18, 28, 38, welche beispielsweise ebenfalls als Teilförderstrecken ausgebildet sind. Auch die Übergabeeinheiten 18, 28, 38 verfügen über einen entsprechenden (hier jedoch nicht explizit dargestellten) Antrieb und eine Anzahl an entsprechenden Sensoren 18S, 28S, 38S. Die Übergabeeinheiten können von den eigentlichen Förderstrecken 10, 20, 30 unabhängige Segmente sein. Die Übergabeeinheiten 18, 28, 38 können jedoch auch eine jeweilige Teilförderstrecke der zugeordneten Förderstrecke 10, 20, 30 darstellen.

Der Einfachheit halber sind in FIG 1 nur die Übergabeeinheiten 18, 28, 38 mit entsprechenden Sensoren 18S, 28S, 38S versehen. Entsprechende Messsignale werden der Recheneinheit 60 zur weiteren Verarbeitung zugeführt. Ein Messsignal ist durch eine punktierte Linie dargestellt. Der Einfachheit halber sind nicht alle Messsignale bzw. zur Übertragung erforderliche Signalleitungen dargestellt.

Die den Teilförderstrecken 11-13, 21-23, 31-33 zugeordneten Antriebe 11A-13A, 21A-23A, 31A-33A, 51A werden über gestrichelte Linien mit entsprechenden Ansteuersignalen gesteuert. Der Einfachheit halber sind nicht alle Ansteuersignale bzw. zur Übertragung erforderliche Ansteuerleitungen dargestellt.

Die computerimplementierte Konfiguration der geregelten Antriebsapplikation des Logistiksystems 1 wird in FIG 1 durch die Recheneinheit 60 durchgeführt. Die Schritte können jedoch auch auf einer von der letztendlichen Steuerung des Logistiksystems 1 unabhängigen Recheneinheit durchgeführt werden.

Die Steuerungslogik dieser von der Recheneinheit 60 durchgeführten Steuerung kann auch durch ein in FIG 2 schematisch dargestelltes System 200, das zumindest ein Neuronales Netz NN sowie zumindest eine Stoppuhr SU umfasst, erlernt und anschließend vorhergesagt / simuliert werden. Dieses Vorgehen ist in schematischer Weise in FIG 2 dargestellt.

In einem ersten Schritt S1 erfolgt das Bestimmen eines Systemmodells des Logistiksystems 1 anhand von Betriebsdaten BD des Logistiksystems. Die Betriebsdaten BD liegen für eine Vielzahl von Zeitpunkten des Betriebs des Logistiksystems 1 vor und umfassen für jeden Zeitpunkt Messwerte der Sensoren 11S-13S, 21S-23S, 31S-33S, 18S-38S, wie z.B. Lichtschrankensignale, Motorströme, Positionen der Stückgüter auf den jeweiligen Teilförderstrecken 11-13, 21-23, 31-33, 18-38, Drehzahlen der Antriebe 11A-13A, 21A-23A, 31A-33A, sowie Geschwindigkeiten der Teilförderstrecken 11-13, 21-23, 31-33. Grundsätzlich können dabei nicht nur Betriebsdaten BD des aktuell betrachteten Logistiksystems 1, sondern auch Betriebsdaten BD von anderen, dann vorzugsweise ähnlichen Logistiksystemen, verarbeitet werden.

Darüber hinaus werden in Schritt S1 für jeden Zeitpunkt Stellgrößenänderungen, welche z.B. Geschwindigkeitsänderungen bzw. Drehzahländerungen der Antriebe 11A-13A, 21A-23A, 31A-33A, 18A-38A umfassen, ermittelt und verarbeitet.

Weiterhin kommt in Schritt S1 zumindest eine Stoppuhr SU zum Einsatz. Diese wird immer dann auf einen Anfangswert zurückgesetzt, wenn sich der Wert ein zugeordnetes Betriebsdatum BD auf eine bestimmte Weise (z.B. von "0" auf "1" oder umgekehrt) ändert. Vorzugsweise ist dieses Betriebsdatum BD einer der Messwerte der Sensoren 11S-13S, 21S-23S, 31S-33S, 18S-38S, insbesondere ein Lichtschrankensignal zur Bestimmung der Position der Stückgüter auf den jeweiligen Teilförderstrecken 11-13, 21-23, 31-33. Es können für mehrere oder sogar für alle Lichtschranken Stoppuhren SU vorgesehen werden. Auch ist die Anzahl der pro Betriebsdatum BD vorgesehen Stoppuhren SU variabel. Diese Flexibilität des Einsatzes der Stoppuhren SU ist durch Indizes 1..n an dem Bezugszeichen SU dargestellt. Diese Indizes werden weggelassen, wenn auf keine bestimmte Stoppuhr Bezug genommen wird. Das allgemeine Bezugszeichen SU ist dabei grundsätzlich nicht beschränkend auf eine einzige Stoppuhr zu verstehen, und zwar auch dann nicht, wenn zur Vereinfachung nur das Verhalten einer bestimmten Stoppuhr beschrieben wird.

Für den Fachmann ist dabei klar, dass die Stoppuhren im Kontext dieser computerimplementierten technischen Lehre als computerimplementierte, digitale Stoppuhren ausgebildet sind. Sie werden zusätzlich zu Sensordaten des Logistiksystems an das Neuronale Netz NN angelegt und z.B. immer dann auf einen Anfangswert zurückgesetzt, wenn Bewegungsmelder den Durchgang eines Pakets anzeigen.

Das Bestimmen des Systemmodells wird mit Hilfe mindestens eines - vorzugsweise rekurrenten - Neuronalen Netzes NN bewirkt. Dabei ist dem Fachmann klar, dass mit diesem Fachbegriff auf diesem Gebiet der Technik computerimplementierte, künstliche Neuronale Netze NN bezeichnet werden.

Zur Bestimmung des Systemmodells wird das Neuronale Netz NN durch Training / Lernen und dabei insbesondere durch Methoden des überwachten Lernens konfiguriert, wobei die Stoppuhren SU dem Neuronalen Netz NN als (zusätzliches) Eingangsdaten neben den Betriebsdaten BD zugeführt werden. Da das diesbezügliche Vorgehen bekannt ist (siehe unter anderem auch die Ausführungen zum Training von Neuronalen Netzen am Beginn der Beschreibung), wird auf eine nochmalige Beschreibung an dieser Stelle verzichtet. Im Ergebnis führt dieses Training dazu, dass in den Gewichten des derart konfigurierten und strukturierten Neuronalen Netzes NN zusätzlich eine Korrelation zwischen den Betriebsdaten BD und dem jeweiligen Fortschreiten der Stoppuhren SU eingespeichert wird.

Dieses Vorgehen hat besonders schöne Auswirkungen im Fall von Eingabedaten, die ohne Stoppuhren SU zu einem gegebenen Zeitpunkt identisch sind, sich aber im zeitlichen Kontext der vorausgegangenen Eingabedaten unterscheiden. Diese zeitliche Entfaltung des in der Vergangenheit liegenden Verhaltens der gleichzeitig laufenden Teilförderstrecken 11-13, 21-23, 31-33, 18-38 ist für das Steuerverhalten der Recheneinheit 60 hochrelevant und bestimmt maßgeblich, welche der Teilförderstrecken 11-13, 21-23, 31-33, 18-38 zu beschleunigen, abzubremsen und mit unveränderter Geschwindigkeit weiter zu betreiben sind.

Durch die zusätzliche Eingabe von Stoppuhren SU unterscheiden sich nun Eingabedaten, die ohne Stoppuhren SU identisch wären, durch unterschiedliche Kombinationen von aktuellen Werten der Stoppuhren SU. Auf diese Weise wird das eingangs beschriebene "Oszillieren" des Trainings sowie der Prognosen des trainierten Neuronalen Netzes NN vermieden.

In einem zweiten Schritt S2 erfolgt das Bestimmen einer voraussichtlichen Regelfunktion REGF des Logistiksystems 1 durch das System 200. Die Regelfunktion REGF umfasst beispielsweise Konfigurationsdaten KD für die Antriebe 11A-13A, 21A-23A, 31A-33A, d.h. Motorströme und/oder Drehzahlen und dergleichen, so dass die zugeordneten Teilförderstrecken 11-13, 21-23, 31-33 in geeigneter Weise beschleunigt oder verzögert werden können. Von dem System 200 können nun alle oder Teile dieser Konfigurationsdaten KD vorhergesagt werden. Ebenso ist denkbar, das System 200 dahingehend zu trainieren und/oder auszugestalten, dass es eine Vorhersage trifft, wann ein Paket in Förderrichtung FR eine nächste Lichtschranke erreicht (Vorhersage 1) und/oder vollständig passiert (Vorhersage 2). Diese Werte können z.B. als fallende Sägezahnkurven ausgegeben werden. Dabei bestimmt sich der Fortschritt der einzelnen Treppen durch die Häufigkeit, mit der die Prognosen durch das System 200 durchgeführt werden. Bei einer eingangs vorgeschlagenen Taktung von 10ms hätte eine derartige Treppenfunktion für einen Zeitraum von 1sec beispielsweise 100 Stufen.

Das Bestimmen der Regelfunktion REGF anhand des in Schritt S1 konfigurierten Systemmodells kann sehr universell verwendet werden, indem unter Vorgabe eines oder mehrerer zu erreichender Ziele in dem Systemmodell zumindest eine voraussichtliche Regelung prognostiziert wird. Als Ziel kann beispielsweise einer oder mehrere der folgenden Parameter berücksichtigt werden: ein mittlerer Durchsatz an Stückgütern am Ausgang 41 der Vereinigungseinheit 40; ein, insbesondere minimaler, Abstand zwischen zwei unmittelbar hintereinander geförderten Stückgütern, d.h. ein Lückenabstand; die Detektion einer Kollision in der Vereinigungseinheit 40, insbesondere an deren Ausgang 41; ein Abstandsgleichförmigkeitsmaß, das eine Abweichung der Abstände von einer Äquidistanz zwischen jeweils zwei unmittelbar hintereinander geförderten Stückgütern charakterisiert, d.h. eine Gleichförmigkeit des Lückenabstands; sowie eine Laufgeschwindigkeit der drei Förderstrecken einer jeweiligen Förderstrecke oder der Förderstrecken im Gesamten, um beispielsweise eine Verschleißoptimierung zu erzielen.

Dabei können durch Variation typischer Modelleingangsgrößen, wie z.B. Größen der Stückgüter, deren Masse, Reibwerte und dergleichen, praxisnahe Verteilungen über bisher vorhandene Betriebsdaten BD erzeugt werden. Dies ermöglicht eine hohe Robustheit der abgeleiteten prognostizierten Regelfunktion REGF und Konfigurationsdaten KD.

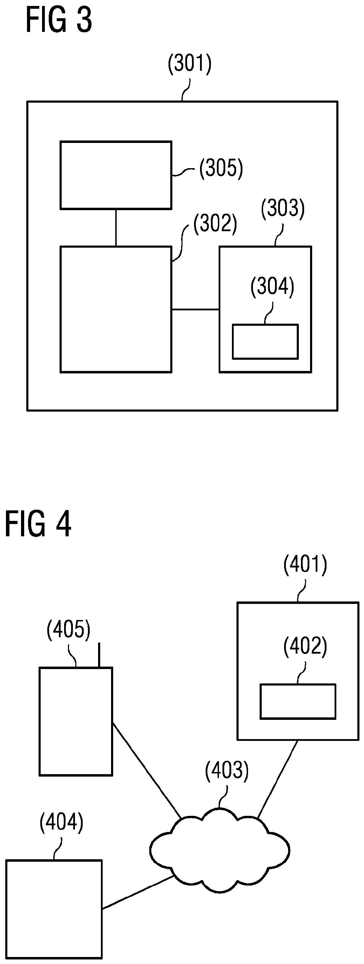

Fig. 3 zeigt ein Beispiel für eine Computerimplementierung der hier beschriebenen technischen Lehren, die Folgendes umfasst:

(301)    Computersystem
(302)    Prozessor
(303)    Speicher
(304)    Computerprogramm (Produkt)
(305)    Benutzerschnittstelle

In dieser Ausführungsform umfasst das Computerprogrammprodukt 304 Programmanweisungen zur Durchführung der Erfindung. Das Computerprogramm 304 ist in dem Speicher 303 gespeichert, was unter anderem den Speicher und/oder das zugehörige Computersystem 301 zu einer Bereitstellungsvorrichtung für das Computerprogrammprodukt 304 macht. Das System 301 kann die Erfindung durch Ausführen der Programmanweisungen des Computerprogramms 304 durch den Prozessor 302 ausführen. Ergebnisse der Erfindung können auf der Benutzerschnittstelle 305 dargestellt werden. Alternativ können sie im Speicher 303 oder in einem anderen geeigneten Mittel zur Speicherung von Daten gespeichert werden.

Fig. 4 zeigt ein weiteres Ausführungsbeispiel einer Computerimplementierung, das umfasst:

(401)    Bereitstellungsvorrichtung
(402)    Computerprogramm (Produkt)
(403)    Computernetzwerk / Internet
(404)    Computersystem
(405)    mobiles Gerät / Smartphone

In dieser Ausführungsform speichert die Bereitstellungsvorrichtung 401 ein Computerprogramm 402, das Programmanweisungen zur Durchführung der Erfindung enthält. Die Bereitstellungsvorrichtung 401 stellt das Computerprogramm 402 über ein Computernetzwerk/Internet 403 zur Verfügung. Beispielsweise kann ein Computersystem 404 oder ein mobiles Gerät / Smartphone 405 das Computerprogramm 402 laden und die Erfindung durch Ausführen der Programmanweisungen des Computerprogramms 402 ausführen.

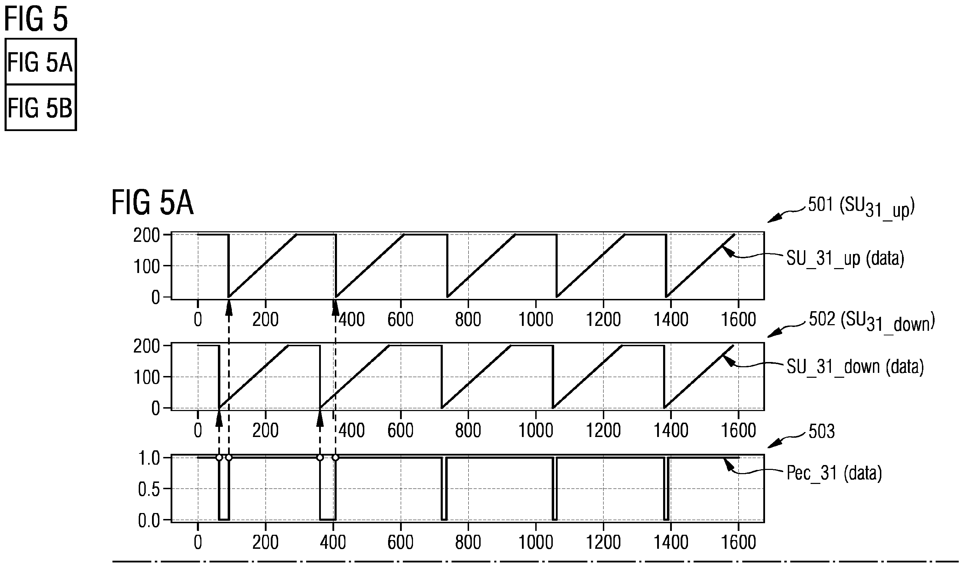

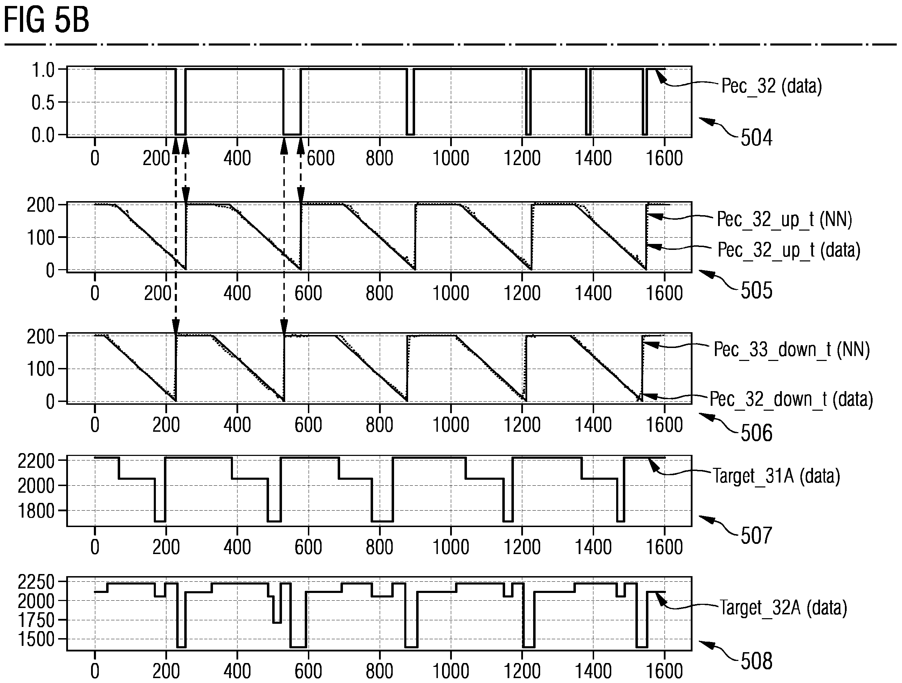

FIG 5 zeigt illustrativ am Beispiel der beiden in FIG 1 in Förderrichtung FR hintereinander angeordneten Teilförderstrecken 31 und 32 die Vorhersagen eines Systems 200, dessen Neuronales Netz NN das Ziel hat vorherzusagen, wann ein Paket nach Passage einer ersten Lichtschranke 31S eine zweite Lichtschranke 32S erreicht (Vorhersage 1) und vollständig passiert (Vorhersage 2). Ausgabe der beiden Werte erfolgt dabei in diesem Beispiel als fallende Sägezahnkurven.

In dieser Minimalausführung werden Daten der zwei nacheinander geschalteten Förderbandabschnitte 31, 32 dargestellt. Ein Ziel ist, basierend auf den steigenden / fallenden Flanken der Lichtschranke 31S des eingehenden Förderbandes 31 eine steigende / fallende Flanke der Lichtschranke 32S des dem Förderband 31 nachgelagerten Förderbandes 32 zu prognostizieren. Eine Lichtschranke liefert dabei ein binäres Signal mit "0" = kein Paket passiert die Lichtschranke und "1" = ein Paket passiert die Lichtschranke. Ziel ist die Erzeugung einer steigenden / fallenden Flanke Pec_32_up_t (NN), Pec_32_down_t (NN), die zu jedem Zeitpunkt t die Zeit bis zum nächsten Umschaltzeitpunkt (von 0 zu 1 bzw. von 1 zu 0) beschreibt.

Das durch das Neuronale Netz NN realisierte Simulationsmodell (auch Prognosemodell genannt) ist in dieser Ausführung zunächst mit historischen Daten der zu optimierenden oder vergleichbaren Anlagen per Supervised-Learning trainiert. Voraussetzungen für das Training von Prognosemodellen sind in diesem Beispiel:

- Die Lichtschranken 31S, 32S am Beginn eines Förderbandes sind stets an derselben Position installiert. Dies kann zum Beispiel dann von Relevanz sein, wenn unterschiedliche Förderband-Längen im Rahmen einer Design-Optimierung simuliert werden sollen.

- Die Längen der Teilförderbänder 11-13, 21-23, 31-33, 18-38 sind bekannt und werden dem Prognosemodell als Teil der Eingabedaten zugeführt. Dies hat den Vorteil, dass das Modell mit verschiedenen Förderbandlängen umgehen und sogar zwischen verschiedenen bekannten Förderbandlängen interpolieren kann.

Analog kann auch eine gesamte Anlage simuliert werden, d.h. das Verhalten der Lichtschranken von mehreren nachgelagerten Förderbändern bzw. von parallel verlaufenden Förderband-Armen. Die Ausführungen in diesem Beispiel stehen pars pro toto.

Es werden sehr kleine Zeitschritte simuliert mit $(t+1) - t \approx 10$ ms. Dies bedingt für das Prognosemodell eine hohe zeitlichen Entfaltung in die Vergangenheit, um den Zeitpunkt der steigenden / fallenden Flanken der nachgelagerten Lichtschranke 32S auf Basis der steigenden / fallenden Flanken der eingehenden Lichtschranke 31S aufgrund von Paketdurchläufen möglichst präzise bestimmen zu können. Werden hierfür beispielsweise n = 400 Schritte aus der Vergangenheit verwendet, entspricht dies 4 Sekunden realer Interaktionszeit auf den Förderbändern 31S, 32S.

In den Diagrammen 501-508 sind ausschnittsweise einige Parameter aus dem realen Betrieb einer Anlage entsprechend der in FIG 1 über einem Zeitraum von etwas über 16 Sekunden dargestellt. Dieser Zeitraum ist jeweils auf der x-Achse mit einer Skalierung in Millisekunden auftragen.

In diesen 16 Sekunden werden vier Pakete vollständig (plus zu Beginn und am Ende zwei weitere teilweise) auf den beiden Förderbändern 31S, 32S transportiert. Es zeigt die Kurve Pec_31 (data) in Diagramm 503 den Durchlauf der Pakete durch die Lichtschranke 31S und die Kurve Pec_32 (data) in Diagramm 504 den zeitversetzten Durchlauf derselben Pakete durch die Lichtschranke 32S. Je zwei benachbarte Zustandswechsel einer Lichtschranke 31S, 32S von "1" nach "0" (aktuelles Paket vorbei) und von "0" zurück nach "1" (nachfolgendes Paket erkannt) entstehen durch eine Lücke zwischen zwei aufeinanderfolgenden Paketen. Man kann gut erkennen, dass in diesem Beispiel die Lücken variable Größe haben und ungefähr im Bereich von 0,1-0,5 Sekunden liegen, während die Verweilzeit der Pakete auf den Förderbändern 31, 32 deutlich länger ist und im Bereich von grob geschätzt ca. 2,5-3,5 Sekunden liegt. Jedes Paket verweilt also weniger als 4 Sekunden auf einem der Förderbänder 31, 32, so dass in diesem Beispiel eine Vergangenheit von n = 400 Schritten ausreichend ist, den kompletten Durchlauf eines Pakets auf jedem der Förderbänder 31, 32 abzudecken. Gleichwohl muss die Vergangenheit aber auch nicht (noch) größer gewählt werden.

In den Diagrammen 507, 508 zeigen die beiden Kurven Target_31A (data), Target_32A (data) die von der Recheneinheit 60 ausgegebenen Stellgrößen für die Geschwindigkeit bzw. Drehzahl der beiden Antriebe 31A, 32A der beiden Förderbänder 31, 32. Diese Stellgrößen zielen durch Beschleunigen und Abbremsen von Paketen darauf ab, die vorgegebenen Ziele der Steuerung zu erreichen, also z.B. eine Verhinderung von Kollisionen in der Vereinigungseinheit 40 oder eine optimale Nutzung der Förderkapazität durch eine Minimierung der Beabstandung zwischen den Paketen oder eine Beabstandung so, dass die von der Anlage 1 transportierten Pakete passend zur Taktfrequenz einer (nicht dargestellten) Schlauchbeutelmaschine am Ende der Förderstrecke angeliefert werden.

Durch Korrelation des zeitlichen Abstands der beiden benachbarten Zustandswechsel einer Lichtschranke 31S, 32S von "1" nach "0" (aktuelles Paket vorbei) und von "0" zurück nach "1" (nachfolgendes Paket erkannt) mit den Stellgrößen der jeweils zugeordneten Antriebe 31A, 32A lässt sich der horizontale Abstand der durchlaufenden Pakete ziemlich genau ableiten, was eine wichtige Information für das Erreichen von idealen Abständen zwischen Paketen ist. Durch Anlegen dieser Information als Eingabedaten an das Neuronales Netz NN ist deshalb auch das Neuronales Netz NN in der Lage, die Korrelation durch das Training in Schritt S1 in seinen Gewichten zu verinnerlichen und sodann in Schritt S2 daraus aus gegebenen Eingabedaten eine Prognose des zukünftigen Verhaltens einer Steuerung abzuleiten, die auch den horizontalen Abstand der Pakete in verlässlicher Weise berücksichtigt.

Auf vergleichbare Weise lässt sich auch die horizontale Größe der Pakete ableiten. Maßgeblich ist dabei der zeitliche Abstand der beiden benachbarten Zustandswechsel einer Lichtschranke 31S, 32S von "0" nach "1" (aktuelles Paket erkannt) und von "1" zurück nach "0" (aktuelles Paket vorbei). Diese Korrelation ist aber komplexer, weil sie sich über einen deutlich längeren Zeitraum erstreckt und in diese Zeiträume mehrere unterschiedlichen Geschwindigkeiten der Antriebe 31A, 32A fallen. Auf Grund der - im Vergleich zum Abstand zwischen Paketen - deutlich längeren Erstreckung in die Vergangenheit ist die horizontale Größe eines Pakets für das Neuronale Netz NN schwerer zu erlernen und zu erkennen als der Abstand zwischen zwei Paketen.

Das Prognosemodell des Systems 200 kann mit Herausforderungen wie diesen und weiteren umgehen, indem es zum Zeitpunkt t - im Beispiel zur leichteren Verständlichkeit beschränkt auf die beiden Förderbänder 31, 32 - die folgenden Inputfeatures als Eingabedaten des Neuronalen Netzes NN, gemessen zu den letzten n Zeitschritten, nutzt:

- Länge der Förderbandabschnitte 31, 32

- Lichtschranken-Zustand Pec_31 (data), Pec_32 (data)

- Zeitpunkt des letzten Lichtschranken-Zustandswechsels als zeitlich steigende Sägezahnkurve (in den Diagrammen 501, 502 repräsentiert durch den jeweils aktuellen Wert von zwei Stoppuhren $SU_{31\_up}$, $SU_{31\_down}$, wobei eine erste Stoppuhr $SU_{31\_up}$ bei einer fallenden Flanke der Kurve Pec_31 (data), die den Eintritt eines Pakets in die Lichtschranke 31S anzeigt, auf einen Anfangswert "0" zurückgesetzt wird und eine zweite Stoppuhr $SU_{31\_down}$ bei einer steigenden Flanke der Kurve Pec_31 (data), die den Austritt eines Pakets aus der Lichtschranke 31S anzeigt, auf einen Anfangswert "0" zurückgesetzt wird). Dabei muss dies nicht zwangsläufig eine stückweise lineare Funktion wie eine Sägezahnkurve sein, sondern kann beispielsweise auch eine Exponentialfunktion sein. Das durch einen Lichtschrankenzustandswechsel ausgelöste Zurücksetzen der zugeordneten Stoppuhren SU auf einen Anfangswert ist in FIG 5 durch exemplarische Pfeile zwischen den Diagramme 501 und 502 angedeutet, wobei die Pfeile von Diagramm 502 ausgehen und ihre Wirkung in Diagramm 501 haben, indem die dort dargestellten Stoppuhren SU in diesem Beispiel auf einen Anfangswert "0" zurückgesetzt werden.

- Ist- und/oder Soll-Geschwindigkeit der Antriebsmotoren 31A, 32A (in den Diagrammen 507, 508 ist die Soll-Geschwindigkeit in den Kurven "Target_31A (data)" / "Target_32A (data)" dargestellt)

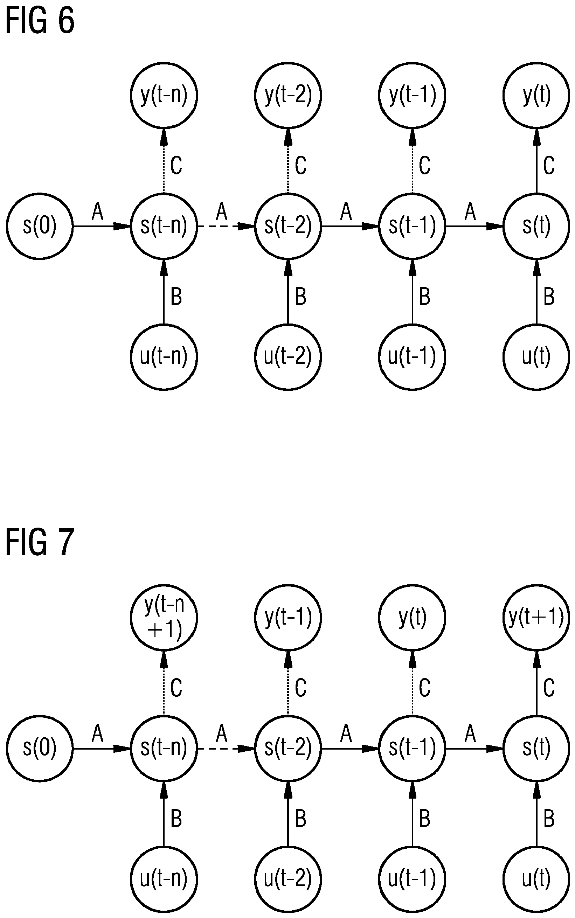

FIG 6 und FIG 7 zeigen unterschiedliche Varianten eines möglichen Prognosemodells mit Neuronalen Netzen NN. Dabei kennzeichnen jeweils für einen bestimmten Zeitpunkt t:

- s(t) den aktuellen Zustand der Anlage 1
- u(t) die Eingabedaten des Systems 200
- y(t) die Ausgabedaten des Systems 200

Dabei können am Beispiel der Teilförderstrecke 31 pars pro toto die Eingabedaten in beiden dargestellten Varianten im Zeitpunkt t sein:

- Länge der Teilförderstrecke 31
- Zustand der Lichtschranke 31
- Wert der Stoppuhren $SU_{31\_up}$, $SU_{31\_down}$
- Ist-Geschwindigkeit der Antriebe 31A, 32A
- Soll-Geschwindigkeit der Antriebe 31A, 32A

Für das Implementierung eines Prognosemodells eignen sich die aus der Literatur bekannten Rekurrenten Neuronale Netze NN sehr gut, da diese die Eigenschaft besitzen zeitliche Zusammenhänge inhärent abbilden zu können. Dies hat insbesondere zum Vorteil, dass das Zeitverhalten des zugrunde liegenden dynamischen Systems, wie z.B. der Anlage 1, über eine einzige Matrix A gelernt werden kann und der Zustand s(t) zum jeweiligen Zeitpunkt t vergleichsweise klein ist. Bei vielen zu berücksichtigenden Zeitschritten aus der Vergangenheit, wie z.B. n=400 in unserem Fall, wäre diese Matrix bei Standard-MLPs (Multi-Layer Perceptron) sehr groß und daher anfällig für Overfitting. Die Matrizen A/B/C sind in den beiden dargestellten Varianten jeweils "geteilte" Gewichtsmatrizen, sogenannte Shared-Weights, die z.B. durch Backpropagation-Through-Time (BPTT) trainiert werden, indem der Mittelwert aller n Fehlergradienten für einen Gradienten-Abstiegsschritt verwendet wird.

Die in FIG 6 dargestellte Variante zeigt ein rekurrentes Neuronales Netz NN, welches als Ziel hat, als Ausgabedaten des Systems 200 zum Zeitpunkt t (z.B. als Count-Down-Zähler) die ab dem Zeitpunkt t gemessene Anzahl von Zeitschritten zu prognostizieren, nach welchen eine steigende / fallende Flanke der Lichtschranke 32 des nachgelagerten Förderbandes 32 zu erwarten ist.

Sie löst diese Aufgabe mit folgenden Zustandsübergangsgleichungen und unter Verfolgung folgenden Optimierungsziels:

Zustandsübergangsgleichungen:

$$y_t \;=\; Cs_t \tag{1}$$

$$s_t \;=\; tanh(Bu_t + As_{t-1}) \tag{2}$$

Optimierungsziel:

$$\frac{1}{n}\sum_{k=0}^{k=n}\left(y_{t-k} - y_{t-k}^d\right)^2 \to \min_{A,B,C} \tag{3}$$

Der zeitliche Verlauf der so bewirkten Ausgabedaten ist in FIG 5 in Diagramm 506 als Kurve Pec32_down_t (NN) für die fallende Flanke und in Diagramm 505 als Kurve Pec32_up_t (NN) für die steigende Flanke dargestellt. Man erkennt durch Überlagerung der beiden Vorhersagekurven mit real gemessenen Daten, dass die Vorhersagen zu jedem Zeitpunkt t beinahe exakt mit den die Realität repräsentierenden Kurven - in Diagramm 505 Pec_32_up_t (data) und in Diagramm 506 Pec_32_down_t (data) - übereinstimmen. Durch Pfeile zwischen den Diagrammen 504 und 505 wird in FIG 5 exemplarisch verdeutlicht, dass der tatsächliche Eintritt der Flanken von dem Neuronalen Netz NN sehr exakt vorhergesagt wird.

Vorteilhaft kann mit dieser Variante das voraussichtliche Verhalten der nachgelagerten Lichtschranke 32 mit nur einem Schritt über einen langen Zeithorizont hinweg prognostiziert werden, wodurch in der Computerimplementierung viele Berechnungs(zwischen)schritte entfallen. Dies ist von besonders schönem Vorteil, wenn z.B. die Steuerbefehle an die Antriebe (Soll-Geschwindigkeit des Antriebmotors) über viele Schritte hinweg optimiert werden soll, um z.B. eine nahende Kollision beim Paket-Vereinzelungsprozess auf dem ausgehenden Fließband (über mehrere Arme betrachtet) frühzeitig zu vermeiden.

Allerdings kann auf diese Weise keine Ein-Schritt-Dynamik der Ist-Geschwindigkeit von Antriebsmotoren bewirkt werden. Mit der "Ein-Schritt Dynamik" ist gemeint, dass der Folgezustand zum Zeitpunkt t+1 nur vom Zustand und den Eingabedaten BD zum Zeitpunkt t abhängig ist (Markov-Eigenschaft).

Die in FIG 7 dargestellte Variante zeigt ein rekurrentes Neuronales Netz NN, welches zum Zeitpunkt t eine solche Ein-Schritt-Dynamik bewirken kann. Sie hat als Ziel, folgende Ausgabedaten zu prognostizieren:

- den voraussichtlich erwarteten, binären Zustand der Lichtschranke 32 des nachgelagerten Förderbandes zum Zeitpunkt t+1 sowie
- die voraussichtlich zu erwartende Ist-Geschwindigkeit der Antriebsmotoren 31A, 32A zum Zeitpunkt t+1, basierend auf deren Soll-Geschwindigkeiten bis zum Zeitpunkt t.

Sie löst diese Aufgabe mit folgenden Zustandsübergangsgleichungen und unter Verfolgung folgenden Optimierungsziels:

Zustandsübergangsgleichungen:

$$y_{t+1} \quad = \quad Cs_t \tag{1}$$

$$s_t \quad = \quad tanh(Bu_t + As_{t-1}) \tag{2}$$

Optimierungsziel:

$$\frac{1}{n}\sum_{k=0}^{k=n}\left(y_{t-k} - y_{t-k}^d\right)^2 \to \min_{A,B,C} \tag{3}$$

Vorteilhaft können mit dieser Variante neben den voraussichtlichen Zuständen von nachgelagerten Lichtschranken auch die voraussichtlichen Ist-Geschwindigkeiten der Antriebsmotoren zum Zeitpunkt t+1 simuliert werden (Trägheit des Antriebs).

Ein besonders schöner Vorteil liegt darin, dass die Ausgabe zum Zeitpunkt t dem Neuronalen Netz NN direkt als Eingabe zum Zeitpunkt t+1 dienen kann, wodurch eine Schritt-für-Schritt Dynamik über theoretisch beliebig viele Schritte in die Zukunft simuliert werden kann. Dies befähigt u.a. das Verfolgen von Paketen auf dem Förderband.

Im Vergleich der beiden Varianten ist eine Computerimplementierung der in FIG 6 dargestellten Variante ggf. etwas weniger rechenaufwändig, weil bei der in FIG 7 dargestellten Variante jeder Berechnungsschritt, unter Einbeziehung der zu tätigenden Soll-Geschwindigkeit, einzeln simuliert wird.

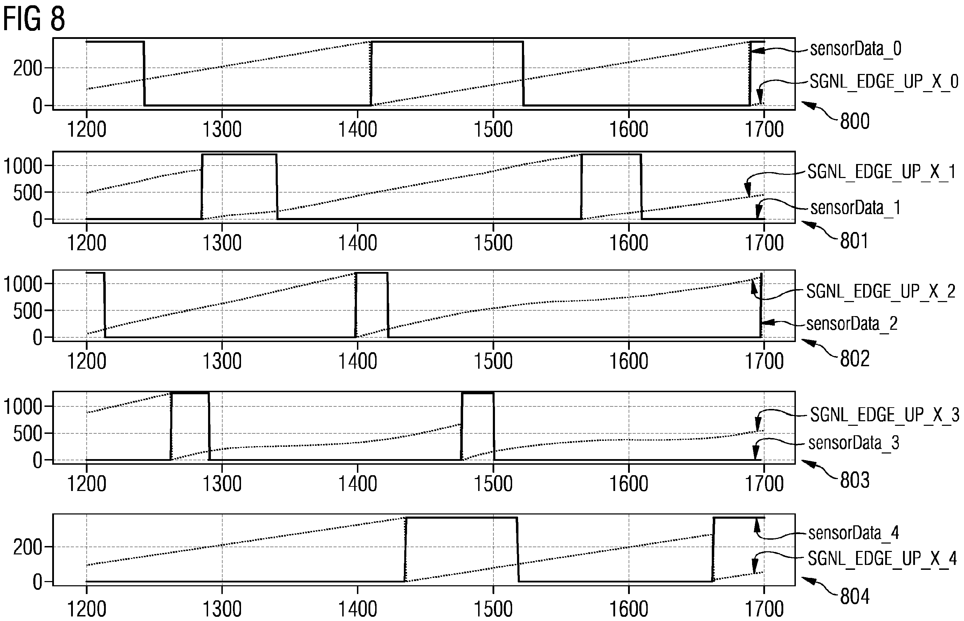

FIG 8 zeigt alternative Ausgestaltungen digitalen Stoppuhren SU. In diesem Beispiel zeigen in den Diagramm 800-804 die fünf Kurven SGNL_EDGE_UP_X_0 bis SGNL_EDGE_UP_X_4 den dynamischen Verlauf von fünf digitalen Stoppuhren SU in Abhängigkeit von steigenden / fallenden Flanken von ihnen zugeordneten Lichtschranken. Die Kurven der digitalen Stoppuhren SU werden in diesem Beispiel mit den Sägezahnfunktionen realisiert, die nicht linear über die Zeit hinweg wachsen, sondern auf Basis der Unterschiede zwischen den Bandpositionen

- zum Zeitpunkt der fallenden oder steigenden Flanke von ihnen zugeordneten Lichtschranken und
- zum aktuellen Zeitpunkt.

In den Diagrammen 800-804 sind zur Vereinfachung nur der Kurven für Stoppuhren SU dargestellt, die bei einer steigenden Flanke einer Lichtschranke auf einen Anfangswert zurückgesetzt werden. Analoge Kurven (nicht dargestellt) können auch für Stoppuhren SU vorgesehen werden, die bei einer fallenden Flanke einer Lichtschranke auf einen Anfangswert zurückgesetzt werden.

Die Kurven für die Stoppuhren SU zeigen in diesem Beispiel in jedem Zeitpunkt 1200-1700 die akkumulierte Bewegung der Förderbänder, gemessen in [mm], seit der letzten steigenden Lichtschrankenflanke in den Kurven sensorData_0 bis sensorData_4 .

Dabei werden die in den Diagrammen 800 und 804 dargestellten Förderbänder mit konstanter Geschwindigkeit gefahren, weshalb sich linear ansteigende Kurven für die beiden Kurven SGNL_EDGE_UP_X_0 und SGNL_EDGE_UP_X_4 ergeben.

Die in den Diagrammen 801 bis 803 dargestellten Förderbänder werden im Unterschied dazu mit variablen Geschwindigkeiten gefahren, woraus in diesem Beispiel das nichtlineare, monoton steigende Verhalten der Kurven SGNL_EDGE_UP_X_1 bis SGNL_EDGE_UP_X_3 resultiert.

Obwohl die vorstehenden Überlegungen teils sehr detailliert vor allem am Beispiel der hochkomplexen, zeitabhängigen Korrelation zwischen Teilförderbändern einer komplexen Paketförderanlange mit mehreren, parallelen Förderbändern illustriert und beschrieben wurden, sind sie nicht durch die offenbarten Beispiele eingeschränkt und andere Variationen können vom Fachmann hieraus abgeleitet werden, ohne insbesondere den Schutzumfang der durch die Ansprüche festgelegten Erfindung zu verlassen. So gelten viele der Überlegungen gleichermaßen in jedem System, dessen dynamisches Verhalten mit Hilfe von zumindest einer Serie von Messwerten messbarer Systemparameter, die über einen Zeitraum verteilt erhoben werden, beschrieben werden kann. Diese Voraussetzung erfüllen viele dynamische Systeme, die in einer Wechselwirkung mit der Umwelt stehen. Ein dynamisches System kann ohne Anspruch auf Vollständigkeit beispielsweise ein mechanisches Gebilde, ein elektrisches Netzwerk, eine Maschine, eine Förder- oder Sortieranlage für beliebige Gegenstände wie z.B. Koffer, Briefe oder Werkstoffe, eine Produktionsstraße, wie sie z.B. in der Herstellung von Automobilen zum Einsatz kommen, eine aus der Verfahrenstechnik bekannte Dosieranlage oder ein biologischer Vorgang sein. Auch kann das dynamische Verhalten von Systemen der Regelungstechnik gemessen und so von der Erfindung prognostiziert werden. Andere Anwendungen und Anwendungsgebiete der Erfindung können vom Fachmann aus diesen Anwendungsbeispielen abgeleitet werden, ohne den Schutzumfang der Erfindung zu verlassen.

Dieses große, universelle Anwendungsspektrum erklärt sich unter anderem dadurch, dass die technische Lehre zur Lösung eines technischen Problems mit Bereitstellung der innovativen Neuronalen Netze NN abgeschlossen ist, wenn nicht sogar noch früher allein durch die Anordnung und funktionale Wirkverbindung der Neuronalen Netze NN. Für die vollständige Ausführung der technischen Lehre ist eine spezifische Anwendung auf ein bestimmtes System, die beispielsweise in einer Beeinflussung des Systems durch Erzeugung, Ausgabe und/oder Anwendung eines Steuersignals auf das System liegen kann, nicht zwingend erforderlich. Eine derartige nachgelagerte Anwendung auf ein System ist möglich, aber optional. Ebenso ist für eine vollständige Ausführung keine direkte Anbindung an Sensoren erforderlich, mit denen Messwerte unmittelbar während des Betriebs eines Systems erhoben werden. Die Messwerte können auch zu einem früheren Zeitpunkt gesammelt werden oder auch künstlich generiert worden sein, weil man das Verhalten eines hypothetischen Systems untersuchen möchte, das z.B. nur geplant, aber noch nicht hergestellt ist. Es ist evident, dass sich durch Vermeidung von Prototypen erhebliche Einsparungen von wertvollen Ressourcen erzielen lassen.

Es ist auch unerheblich bzw. unwesentlich, ob durch Neuronale Netze NN erzeugte Steuersignale automatisiert durch eine maschinelle Steuervorrichtung oder manuell durch einen Eingriff eines Menschen auf das System angewendet werden, weil dies nur einen der technischen Lehre nachgelagerten Schritt darstellt, der je nach Ausführung für sich oder in Zusammenwirkung mit dem - so gesehen vorgelagerten - Neuronalen Netz NN eine eigenständige technische Lehre darstellen kann. Eine derartige Anwendung eines Neuronalen Netzes NN auf ein System kann beispielhaft eine unmittelbare Beeinflussung einer Paketsortieranlage sein. Es sind aber viele andere gleichartige Beeinflussungen von Systemen im Vertrauen auf die innovativen Neuronalen Netze NN und die von ihnen erstellten Prognosen und Steuersignale möglich, die automatisiert maschinell oder durch entsprechend instruierte Menschen manuell durchgeführt werden können. Diese können, um einige ausgewählte Beispiele für viele weitere zu nennen, wie ausführlich beschrieben eine Beeinflussung der Geschwindigkeit von Transportbändern einer Paketsortieranlage sein, um einem prognostizierten zukünftigen Stau entgegenzuwirken; In einer Produktionsstraße für Automobile kann frühzeitig auf zukünftige Verknappungen von Bauteilen reagiert werden, um einem Stopp der Produktion entgegenzuwirken; In einem biologischen Vorgang kann dies eine Veränderung von Zutaten sein, um eine prognostizierte zukünftige Entwicklung, die als unvorteilhaft angesehen wird, frühzeitig und vor allem rechtzeitig entgegenzuwirken. Wie bei vielen dynamischen Systemen ist diese zeitliche Komponente wegen der inhärenten Latenzzeit, mit dem das System auf Änderungen von Systemparametern reagiert, von besonderer Bedeutung, insbesondere dann, wenn nachteiligen Entwicklungen nur präventiv entgegengewirkt werden kann, weil eine Korrektur nicht mehr möglich ist, wenn ein Schaden bereits eingetreten ist.

**Patentansprüche**

1. Neuronales Netz (NN) zum Management von Prozessen mit zeitlicher Entfaltung in die Vergangenheit mit Eingangsdaten (BD), die einen Zustand des Prozesses beschreiben, und von dem Neuronalen Netz daraus abgeleiteten Ausgangsdaten (REGF), wobei zumindest eine digitale Stoppuhr (SU) vorgesehen ist,

   a. deren Wert als weiteres Eingangsdatum dem Neuronalen Netz zugeführt wird und
   b. die bei einer bestimmten Änderung eines der Eingangsdaten auf einen Ausgangswert gesetzt wird und danach dem Neuronalen Netz einen zunehmenden Abstand von diesem Zeitpunkt mit einem ansteigenden oder fallenden Verlauf seines Wertes anzeigt.

2. Neuronales Netz nach dem vorstehenden Anspruch, wobei der Verlauf des Wertes der Stoppuhr

   a. linear,
   b. exponentiell, oder
   c. auf Basis von Unterschieden zwischen dem Wert mindestens eines der Eingangsdaten zum Zeitpunkt des letzten Zurücksetzens der Stoppuhr auf ihren Ausgangswert und den Werten dieser Eingangsdaten in den danach folgenden Zeitpunkten

   ansteigt oder fällt.

3. Neuronales Netz nach einem der vorstehenden Ansprüche, wobei die Stoppuhr nach dem Verstreichen einer gewissen Zeit angehalten wird.

4. Neuronales Netz nach einem der vorstehenden Ansprüche, wobei zumindest ein Eingangsdatum ein Zustand einer Lichtschranke ist, von der im Rahmen des zeitlich entfalteten Prozesses mit Hilfe von binären Werten wechselweise das Vorhandensein und das Nichtvorhandensein von an der Lichtschranke vorbeistreichendem Stückgut angezeigt wird, und für dieses Eingangsdatum zwei Stoppuhren ($SU_{31\_up}$, $SU_{31\_down}$) vorgesehen sind, von denen eine bei durch Wechsel des binären Wertes angezeigtem Beginn des Vorhandensein und die andere bei durch Wechsel des binären Wertes angezeigtem Beginn des Nichtvorhandenseins zurückgesetzt wird.

5. Verfahren zur Konfiguration eines nach einem der vorstehenden Ansprüche ausgebildeten Neuronalen Netzes, bei dem die Konfiguration durch datenbasiertes Training des Netzes mit Hilfe von Eingangsdaten des Prozesses aus der Vergangenheit bewirkt wird.

6. Neuronales Netz, trainiert nach dem vorstehenden Verfahren.

7. Verwendung eines nach einem der vorstehenden Ansprüche ausgebildeten Neuronalen Netzes zur Vorhersage zumindest eines voraussichtlichen zukünftigen Verhaltens einer industriellen Anlage (1), in der zumindest zwei Prozesse gleichzeitig in relativer Abhängigkeit zueinander ablaufen und die zumindest teilweise in Abhängigkeit von ihrer zeitlichen Entfaltung in die Vergangenheit relativ zueinander gesteuert werden.

8. Computerprogramm mit Programmcode, von dem ein Neuronales Netz nach einem der vorstehenden Ansprüche implementiert wird, wenn der Programmcode von einem Computer ausgeführt wird.

9. Recheneinheit (60), umfassend ein Computerprogramm nach dem vorstehenden Anspruch.

10. Logistiksystems (1) mit einer oder mehreren parallel verlaufenden Förderstrecken (10, 20, 30) für Stückgut, die in Förderrichtung (FR) jeweils in eine Vereinigungseinheit (40) münden, wobei jede der Förderstrecken (10, 20, 30) aus einer Mehrzahl an Teilförderstrecken (11-13, 21-23, 31-33) besteht, die unter Steuerung einer nach dem vorstehenden Anspruch ausgebildeten Recheneinheit (60) von einem jeweils zugeordneten Antrieb (11A-13A, 21A-23A, 31A-33A) beschleunigt oder verzögert werden, um die Vereinigungseinheit (40) in die Lage zu versetzen, das Stückgut auf eine einzige Ausgangsförderstrecke (50) mit definiertem Abstand zu vereinen.

## FIG 1

FR

13
13A
13S

12
12A
12S

11
11A
11S

18
18S

10

40

50

51
51A

41

23
23A
23S

22
22A
22S

20
21
21A
21S

28
28S

33
33A
33S

32
32A
32S

31
31A
31S

38
38S

30

60

## FIG 2

BD

200

$SU_n$ ... $SU_1$

S1

S2

NN

$SU_n$   $SU_1$

REGF (KD)

## FIG 3

(301)

(305)

(302)

(303)

(304)

## FIG 4

(401)

(405)

(402)

(404)

(403)

FIG 5

| FIG 5A |
|--------|
| FIG 5B |

FIG 5A

501 (SU_31_up)
SU_31_up (data)

502 (SU_31_down)
SU_31_down (data)

503
Pec_31 (data)

FIG 5B

EP 4 300 362 A1

FIG 6

FIG 7

# FIG 8

sensorData_0
SGNL_EDGE_UP_X_0
800

SGNL_EDGE_UP_X_1
sensorData_1
801

SGNL_EDGE_UP_X_2
sensorData_2
802

SGNL_EDGE_UP_X_3
sensorData_3
803

sensorData_4
SGNL_EDGE_UP_X_4
804

EP 4 300 362 A1

Europäisches Patentamt

European Patent Office

Office européen des brevets

**EUROPÄISCHER RECHERCHENBERICHT**

Nummer der Anmeldung

EP 22 18 2422

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 825 263 A1 (SIEMENS AG [DE]) 26. Mai 2021 (2021-05-26) * das ganze Dokument * ----- | 1-10 | INV. G06N3/04 G06N3/08 B65G15/22 |
| X | US 2017/100749 A1 (HARTMANN BERND [DE] ET AL) 13. April 2017 (2017-04-13) * Zusammenfassung; Abbildungen 1, 2 * * Absätze [0003] – [0015], [0030], [0040], [0041], [0048], [0063] * ----- | 1-10 | B65G37/00 B65G43/10 |

**RECHERCHIERTE SACHGEBIETE (IPC)**

B65G
G06N

Der vorliegende Recherchenbericht wurde für alle Patentansprüche erstellt

| Recherchenort | Abschlußdatum der Recherche | Prüfer |
|---|---|---|
| Den Haag | 7. Dezember 2022 | Houtgast, Ernst |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-12-2022

| Im Recherchenbericht angeführtes Patentdokument | Datum der Veröffentlichung | Mitglied(er) der Patentfamilie | Datum der Veröffentlichung |
|---|---|---|---|
| EP 3825263 A1 | 26-05-2021 | CN 114650958 A | 21-06-2022 |
| | | EP 3825263 A1 | 26-05-2021 |
| | | EP 4034482 A1 | 03-08-2022 |
| | | WO 2021099096 A1 | 27-05-2021 |
| US 2017100749 A1 | 13-04-2017 | CN 107031938 A | 11-08-2017 |
| | | DE 102015117241 A1 | 13-04-2017 |
| | | EP 3153242 A2 | 12-04-2017 |
| | | US 2017100749 A1 | 13-04-2017 |

EPO FORM P0461

Für nähere Einzelheiten zu diesem Anhang : siehe Amtsblatt des Europäischen Patentamts, Nr.12/82